# EUROPÄISCHE PATENTSCHRIFT

(11) **EP 2 464 837 B1**
(45) Veröffentlichungstag und Bekanntmachung des Hinweises auf die Patenterteilung: **09.09.2015**
(21) Anmeldenummer: 10732661.3
(22) Anmeldetag: 05.07.2010
(51) Int. Cl.: F01N 3/28, F01N 3/022

(54) **KATALYSATORVORRICHTUNG**
CATALYTIC CONVERTER DEVICE
DISPOSITIF CATALYSEUR

(30) Priorität: 12.08.2009 DE 102009037271
(43) Veröffentlichungstag der Anmeldung: 20.06.2012
(73) Patentinhaber: Volkswagen Aktiengesellschaft, 38440 Wolfsburg (DE)
(72) Erfinder: THESLING, Uwe, 34582 Borken (DE); GRÄF, Holger, 34582 Borken (DE)
(86) Internationale Anmeldenummer: PCT/EP2010/004059
(87) Internationale Veröffentlichungsnummer: WO 2011/018136

(56) Entgegenhaltungen:
- EP-A1- 0 494 049
- DE-A1-102005 001 120
- DE-B3-102007 006 156
- US-A- 3 959 865
- US-A- 5 501 842

## Beschreibung

Die vorliegende Erfindung betrifft eine Katalysatorvorrichtung für eine Abgas erzeugende Brennkraftmaschine mit einem von dem Abgas durchströmbaren Katalysatorkörper, einem den Katalysatorkörper umfassenden Gehäusemantel und einer Einrichtung zum Haltern des Katalysatorkörpers innerhalb des Gehäusemantels gemäß dem Oberbegriff des Anspruchs 1. Die Erfindung betrifft ferner ein Verfahren zur Herstellung einer derartigen Katalysatorvorrichtung.

Katalysatorvorrichtungen sind im Stand der Technik hinlänglich bekannt. So beschreibt beispielsweise die DE 10 2006 035 957 A1 eine Katalysatorvorrichtung mit einem Katalysatorkörper, der innerhalb eines Katalysatorgehäuses gehaltert ist. Zur Halterung des Katalysatorkörpers innerhalb des Katalysatorgehäuses sind ein eingangsseitiger Axialgewebering und ein ausgangsseitiger Axialgewebering vorgesehen, die den Katalysatorkörper sowohl in Axialrichtung als auch in Radialrichtung des Katalysatorgehäuses haltern. Zwischen dem eingangsseitigen Axialgewebering und dem ausgangsseitigen Axialgewebering ist im Zwischenraum zwischen der Außenmantelfläche des einen Außendurchmesser aufweisenden Katalysatorkörpers und der Innenmantelfläche des einen Innendurchmesser aufweisenden Katalysatorkörpergehäuses eine Lager- bzw. Blähmatte vorgesehen, die mittels einer Insulfraxpapierschicht vom Katalysatorkörper getrennt ist. Aufgrund der beiden Axialgeweberinge und der Insulfraxpapierschicht wird das Eindringen von Abgasen in die Lager- bzw. Blähmatte verhindert, so dass die Abgase den Katalysatorkörper durch dessen gesamte Erstreckung in Strömungsrichtung der Abgase durchtreten.

Bei dem Einsatz von Blähmatten in den Katalysatorvorrichtungen ist allerdings bei der Herstellung eine hohe Genauigkeit und Präzision erforderlich, da diese jeweils ein ganz bestimmtes Blähverhalten aufweisen. Ein Spaltmaß für einen Zwischenraum zwischen dem Katalysatorkörper und dem Katalysatorgehäuse muss exakt eingehalten werden, damit die Blähmatte nach einem Blähvorgang den Katalysatorkörper wie gewünscht hält und lagert. Ist das Spaltmaß zu eng, d.h. der Blähmatte steht für den Blähvorgang zu wenig Volumen zur Ausbreitung bzw. Aufblähung zur Verfügung, kann es aufgrund zu großer wirkender Kräfte zu einer Beschädigung des Katalysatorkörpers kommen. Ist hingegen das Spaltmaß zu weit, wirken zu geringe Kräfte, so dass ein stabiles Haltern bzw. Lagern des Katalysatorkörpers nicht gewährleistet ist.

Die US 3,959,865 A offenbart einen organischen oder anorganischen Schaum zur Verbindung von Katalysatorkörper und Gehäuse. Der anorganische Schaum ist als keramischer Schaum beschrieben. An den Übergängen zwischen Katalysatorkörper und Schaum, bzw. zwischen Gehäuse und Schaum sind jeweils Zwischenschichten als Papierlagen vorgesehen.

Aus der EP 0 492 083 A1 ist die Verbindung eines Katalysatorkörpers mit einem Gehäusemantel mittels aufschäumenden Materials bekannt. Zur Zentrierung des Katalysatorkörpers innerhalb des Gehäusemantels sind Zentrierringe vorgesehen.

Vor diesem Hintergrund ist es die Aufgabe der vorliegenden Erfindung bekannte Katalysatorvorrichtungen und deren Herstellverfahren dahingehend weiter zu bilden, so dass in der Folge eine stabile Halterung des Katalysatorkörpers in einfacher Weise ermöglicht wird.

Diese Aufgabe wird durch eine Katalysatorvorrichtung mit den Merkmalen des Anspruchs 1 gelöst.

Der Kern der Erfindung besteht darin, dass der stets zwischen dem Katalysatorkörper und dem Katalysatorgehäuse befindliche Zwischenraum unabhängig von seinem exakten Spaltmaß durch den Fügeschaum anstelle einer bekannten Blähmatte befüllt wird und keine beschädigenden Kräfte auf den Katalysatorkörper wirken. Durch den Wegfall der Blähmatte entfallen die mit ihr verbundenen Nachteile. Hierdurch ist ein exaktes Einhalten des Spaltmaßes nicht mehr erforderlich, was eine Konstruktion der Katalysatorvorrichtung und deren Herstellung vereinfacht und somit zu reduzierten Kosten führt.

Damit der Katalysatorkörper innerhalb des Katalysatorgehäuses stabil und sicher gelagert ist und der Fügeschaum eine hohe Beständigkeit besitzt, weist der Fügeschaum als Grundmaterial Edelstahl auf.

Bei der erfindungsgemäßen Katalysatorvorrichtung ist der Fügeschaum geschlossenporig ausgebildet. Dies bewirkt zum einen, dass das Abgas nicht den Fügeschaum, sondern nur den Katalysatorkörper durchströmen kann, und zum anderen wird durch die in dem Schaum eingeschlossen Gaseinschlüsse eine thermische Isolationswirkung bereitgestellt. Dadurch können weitere Kosten verursachende zusätzliche Wärmeschutzmaßnahmen reduziert bzw. eingespart werden.

Um geeignete und große Gaseinschlüsse in dem erfindungsgemäßen Fügeschaum zu erzeugen, wird dieser durch ein Titanhydrid aufweisendes Treibmittel aufgeschäumt.

Zur Bereitstellung einer bestimmten Flexibilität und Elastizität des Fügeschaumes für eine stoßabsorbierende Halterung des Katalysatorkörpers und zur Überbrückung von unterschiedlichen Wärmeausdehnungskoeffizienten der verschiedenen eingesetzten Materialien können bei der erfindungsgemäßen Katalysatorvorrichtung dem Fügeschaum Beimischungen aus Oxid-, Nitrid-, Keramik- und/oder Verbundwerkstoffen zugefügt werden.

Zur Sicherstellung des ordnungsgemäßen Betriebes und seiner Beständigkeit weist der Fügeschaum eine Dauertemperaturfestigkeit bevorzugt von mindestens 500°C auf. Insbesondere bevorzugt weist der Fügeschaum eine Dauertemperaturfestigkeit von mindestens 650°C auf.

Nachfolgend wird die vorliegende Erfindung anhand der detaillierten Beschreibung eines Ausführungsbeispiels unter Bezug auf die beigefügte einzige Figur näher erläutert.

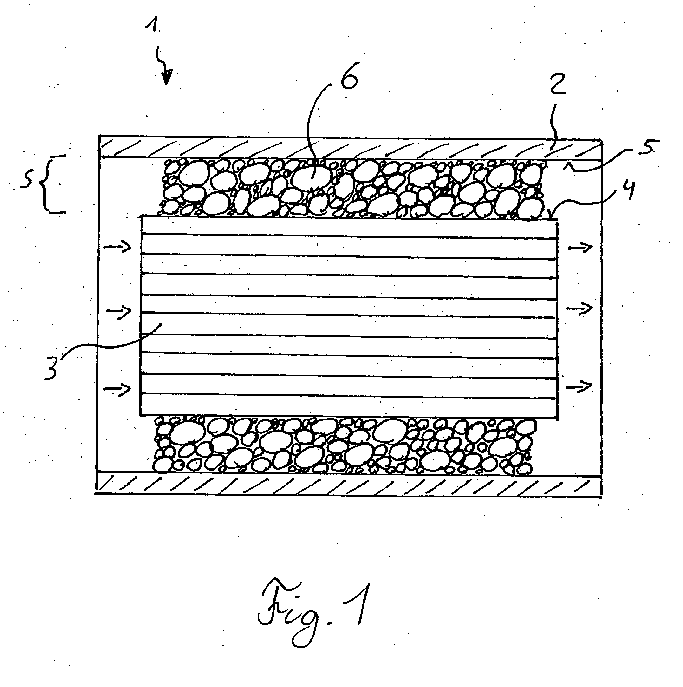

In Figur 1 ist eine Querschnittsdarstellung einer erfindungsgemäßen Katalysatorvorrichtung 1 mit einem Gehäusemantel 2 gezeigt. Innerhalb des Gehäusemantels 2 ist ein Katalysatorkörper 3 bzw. Monolith angeordnet, der von Abgasen einer nicht dargestellten Brennkraftmaschine durchströmt werden kann. Die Strömungsrichtung der Abgase wird in der Figur 1 durch die Pfeile angedeutet.

Zwischen einer Außenfläche 4 des Katalysatorkörpers 3 und einer Innenfläche 5 des Gehäusemantels 2 existiert ein Zwischenraum mit einem Spaltmaß S. Der Zwischenraum zwischen dem Katalysatorkörper 3 und dem Gehäusemantel 2 ist im Bereich des Spaltmaßes durch einen Fügeschaum 6 aufgefüllt, der eine stabile und feste Verbindung zwischen der Innenseite 5 des Gehäusemantels 2 und der Außenfläche 4 des Katalysatorkörpers 3 bereitstellt. Der Fügeschaum 6 bewirkt durch seine relativ große, geschlossenporige Ausgestaltung aufgrund der Gaseinschlüsse eine thermische Isolationswirkung zwischen dem Katalysatorkörper 3 und dem Gehäusemantel 2. Weiterhin wird das Abgas durch die geschlossenporige Ausgestaltung an einem Durchströmen des Fügeschaumes 6 gehindert, so dass der vollständige Abgasstrom durch den Katalysatorkörper 3 hindurchtreten muss.

Die Katalysatorvorrichtung 1 kann in geeigneter Weise in einer Abgasanlage angeordnet sein. Insbesondere kann der Gehäusemantel 2 an seiner Einlass- bzw. Auslassseite mittels geeigneter Deckel (nicht dargestellt), zumindest teilweise, verschlossen sein.

Anhand der Darstellung der Figur 1 ist ersichtlich, dass der Fügeschaum 6 seine Funktionen zur Halterung des Katalysatorkörpers 3, zur thermischen Isolierung und als Toleranzausgleich für das Spaltmaß S erfüllt. Durch eine gewisse Flexibilität und Elastizität des Fügeschaumes 6 aufgrund geeigneter Beimischungen können weiterhin Stöße und Erschütterungen absorbiert werden, wodurch der Fügeschaum 6 zusätzlich als Schutz vor Beschädigungen des Katalysatorkörpers dient.

### Bezugszeichenliste

- 1: Katalysatorvorrichtung
- 2: Gehäusemantel
- 3: Katalysatorkörper
- 4: Außenfläche
- 5: Innenfläche
- 6: Fügeschaum
- S: Spaltmaß

## Patentansprüche

1. Katalysatorvorrichtung (1) für eine Abgas erzeugende Brennkraftmaschine mit einem von dem Abgas durchströmbaren Katalysatorkörper (3), einem den Katalysatorkörper (3) umfassenden Gehäusemantel (2) und einer Einrichtung zum Haltern des Katalysatorkörpers (3) innerhalb des Gehäusemantels (2), wobei die Einrichtung zum Haltern einen Fügeschaum (6) aufweist, der den Katalysatorkörper (3) mit dem Gehäusemantel (2) verbindet, wobei zwischen einer Außenfläche (4) des Katalysatorkörpers (3) und einer Innenfläche (5) des Gehäusemantels (2) ein Zwischenraum mit einem Spaltmaß (S) existiert, wobei der Zwischenraum zwischen dem Katalysatorkörper (3) und dem Gehäusemantel (2) im Bereich des Spaltmaßes (S) durch den Fügeschaum (6) aufgefüllt ist, der eine stabile und feste Verbindung zwischen der Innenfläche (5) des Gehäusemantels (2) und der Außenfläche (4) des Katalysatorkörpers (3) bereitstellt, **dadurch gekennzeichnet, dass** der Fügeschaum (6) als Grundmaterial Edelstahl enthält, wobei der Fügeschaum (6) geschlossenporig ausgebildet ist, wodurch das Abgas an einem Durchströmen des Fügeschaums (6) gehindert ist, so dass der vollständige Abgasstrom durch den Katalysatorkörper (3) hindurchtreten muss und wobei der Fügeschaum (6) durch ein Titanhydrid aufweisendes Treibmittel aufgeschäumt ist.

2. Katalysatorvorrichtung nach einem der vorstehenden Ansprüche, **dadurch gekennzeichnet, das**s der Fügeschaum (6) Beimischungen aus Oxid-, Nitrid-, Keramik- und/oder Verbundwerkstoffen aufweist.

3. Katalysatorvorrichtung nach einem der vorstehenden Ansprüche, **dadurch gekennzeichnet, dass** der Fügeschaum (6) eine Dauertemperaturfestigkeit von mindestens 500°C aufweist.

4. Katalysatorvorrichtung nach Anspruch 3, **dadurch gekennzeichnet, dass** der Fügeschaum (6) eine Dauertemperaturfestigkeit von mindestens 650°C aufweist.

## Claims

1. Catalytic converter device (1) for an internal combustion engine which produces exhaust gas, having a catalytic converter body (3) through which the exhaust gas can flow, having a housing casing (2) which surrounds the catalytic converter body (3), and having a device for retention of the catalytic converter body (3) within the housing casing (2), wherein the device for retention has a joining foam (6) which connects the catalytic converter body (3) to the housing casing (2), wherein, between an outer surface (4) of the catalytic converter body (3) and an inner surface (5) of the housing casing (2), there is an intermediate space with a gap dimension (S), wherein the intermediate space between the
catalytic converter body (3) and the housing casing (2) is filled, in the region of the gap dimension (S), by the joining foam (6), which provides a stable and fixed connection between the inner surface (5) of the housing casing (2) and the outer surface (4) of the catalytic converter body (3), **characterized in that** the joining foam (6) comprises high-grade steel as base material, wherein the joining foam (6) is of closed-pored form, whereby the exhaust gas is prevented from flowing through the joining foam (6), such that the entire exhaust-gas flow must pass through the catalytic converter body (3), and wherein the joining foam (6) is foamed using a foaming agent having titanium hydride.

2. Catalytic converter device according to the preceding claim, **characterized in that** the joining foam (6) has admixtures composed of oxide, nitride, ceramic and/or composite materials.

3. Catalytic converter device according to one of the preceding claims, **characterized in that** the joining foam (6) has a sustained temperature resistance of at least 500°C.

4. Catalytic converter device according to Claim 3, **characterized in that** the joining foam (6) has a sustained temperature resistance of at least 650°C.

## Revendications

1. Dispositif catalyseur (1) pour un moteur à combustion interne produisant des gaz d'échappement, comprenant un corps de catalyseur (3) pouvant être parcouru par les gaz d'échappement, une enveloppe de boîtier (2) entourant le corps de catalyseur (3) et un dispositif pour retenir le corps de catalyseur (3) à l'intérieur de l'enveloppe de boîtier (2), le dispositif pour retenir présentant une mousse de jonction (6) qui relie le corps de catalyseur (3) à l'enveloppe de boîtier (2), un espace intermédiaire existant entre une surface extérieure (4) du corps de catalyseur (3) et une surface intérieure (5) de l'enveloppe de boîtier (2) avec une mesure d'intervalle (S), l'espace intermédiaire entre le corps de catalyseur (3) et l'enveloppe de boîtier (2) dans la région de la mesure d'intervalle (S) étant rempli avec la mousse de jonction (6) qui fournit une liaison stable et fixe entre la surface intérieure (5) de l'enveloppe de boîtier (2) et la surface extérieure (4) du corps de catalyseur (3), **caractérisé en ce que** la mousse de jonction (6) contient, en tant que matériau de base, de l'acier spécial, la mousse de jonction (6) étant réalisée avec des pores fermés, de sorte que les gaz d'échappement ne puissent pas s'écouler à travers la mousse de jonction (6), de telle sorte que la totalité du flux de gaz d'échappement doive traverser le corps de catalyseur (3), et la mousse de jonction (6) étant moussée par un agent propulseur présentant de l'hydrure de titane.

2. Dispositif catalyseur selon la revendication précédente, **caractérisé en ce que** la mousse de jonction (6) présente des mélanges de matériaux d'oxyde, de nitrure, de céramique et/ou composites.

3. Dispositif catalyseur selon l'une quelconque des revendications précédentes, **caractérisé en ce que** la mousse de jonction (6) présente une résistance durable à la température d'au moins 500°C.

4. Dispositif catalyseur selon la revendication 3, **caractérisé en ce que** la mousse de jonction (6) présente une résistance durable à la température d'au moins 650°C.
